# EUROPEAN PATENT APPLICATION

(11) **EP 4 631 712 A1**
(43) Date of publication of application: **15.10.2025**
(21) Application number: 25160767.7
(22) Date of filing: 27.02.2025
(51) Int. Cl.: B32B 1/00

(54) **SYSTEMS AND METHODS FOR PREPARING METAL MATRIX COMPOSITE SUBSTRATES FOR SUBSEQUENT TREATMENT**

(30) Priority: 09.04.2024 US 202418630291
(71) Applicant: The Boeing Company, Arlington, VA 22202 (US)
(72) Inventor: Belcher, Marcus Anthony, Arlington, 22202 (US); Childs, Collin Williams, Arlington, 22202 (US); Albrecht, Mark Everette, Arlington, 22202 (US); Smith, Edwin John, Arlington, 22202 (US); Grob, Jacob William, Arlington, 22202 (US)
(74) Representative: Morrall, Jonathan Ian McLachlan

(57) **Abstract**

A method includes plasma treating one or more surfaces of a metal matrix composite substrate. The metal matrix composite substrate includes a metal matrix and composite fibers. After said plasma treating, the method also includes applying a sol-gel layer on the one or more surfaces of the metal matrix composite substrate.

## Description

### FIELD OF THE DISCLOSURE

Examples of the present disclosure generally relate to systems and methods for preparing metal matrix composite substrates for subsequent surface treatment, such as bonding or painting.

### BACKGROUND OF THE DISCLOSURE

Various mechanical and chemical surface preparation methods are used to remove a native oxide layer from a surface of a metal. As an example, sanding is a mechanical method that abrades away material. As another example, acid etching is a chemical method that removes layers of materials.

However, such processes can adversely affect metal matrix composite materials, given the proximity of composite fibers to the exposed surface of such materials. In particular, removing material layers from a surface of a metal matrix composite material can expose underlying composite fibers. Bonding properties of the metal matrix composite material may be adversely affected if the composite fibers are exposed.

### SUMMARY OF THE DISCLOSURE

A need exists for an efficient and effective method to prepare a surface of a metal matrix composite material. Further, a need exists for a method to prepare a surface of a metal matrix composite material that does not adversely affect bonding properties of the metal matrix composite material.

With those needs in mind, certain examples of the present disclosure provide a method including initially treating one or more surfaces of a metal matrix composite substrate; and after said initially treating, applying an adhesion promoter layer on the one or more surfaces of the metal matrix composite substrate.

The metal matrix composite substrate can form a portion of an aircraft.

In at least one example, the metal matrix composite substrate includes a metal matrix and composite fibers.

In at least one example, said initially treating includes plasma treating (for example, atmospheric pressure plasma treating).

In at least one example, said initially treating includes laser ablating.

The adhesion promoter layer can include one or more films or coatings of material.

In at least one example, the adhesion promoter layer is or otherwise includes a sol-gel layer.

The adhesion promoter layer can include a chromate conversion coating.

The method can also include, after applying the adhesion promoter, subsequently treating the metal matrix composite substrate on the one or more surfaces.

For example, said subsequent treatment step includes painting.

The method can also include forming a thermal emitter with the metal matrix composite substrate.

### BRIEF DESCRIPTION OF THE DRAWINGS

Figure 1 illustrates a flow chart of a method, according to an example of the present disclosure.
Figure 2 illustrates a simplified block diagram of an adhesion promoter layer applied over a surface of a metal matrix composite substrate, according to an example of the present disclosure.
Figure 3 illustrates a block diagram of an aircraft, according to an example of the present disclosure.
Figure 4 illustrates a perspective front view of an aircraft, according to an example of the present disclosure.
Figure 5 illustrates a schematic representation of a plasma treatment device, according to example of the present disclosure.
Figure 6 illustrates a perspective view of a nozzle of the plasma treatment device, according to an example of the present disclosure .
Figure 7 illustrates a bottom view illustrating a tip of the nozzle of Figure 6, according to an example of the present disclosure.
Figure 8 illustrates a perspective view of the nozzle similar to Figure 6, but with the nozzle having an emanation angle of 2 degrees and the plasma flume being removed for clarity, according to an example of the present disclosure.
Figure 9 illustrates a bottom view illustrating a tip of the nozzle of Figure 8, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

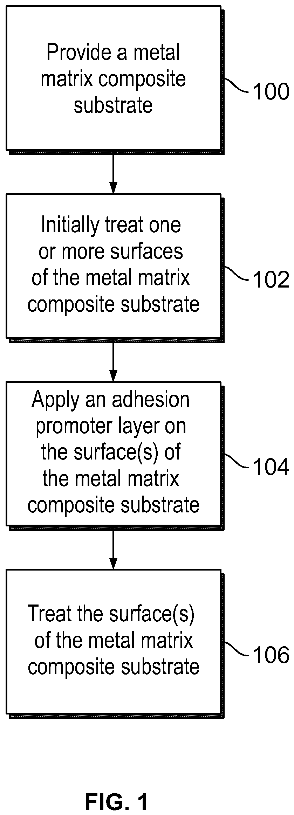

Figure 1 illustrates a flow chart of a method, according to an example of the present disclosure. At 100, a metal matrix composite substrate is provided. The metal matrix composite substrate can be various structures, such as a panel, a beam, an assembly of structures, and the like. In at least one example, the metal matrix composite substrate forms a portion of an aircraft, such as a wing, fuselage, or the like. The metal matrix composite substrate is a semi-metallic material (instead of just a metal), and includes a matrix formed of metal (such as aluminum, copper, steel, or the like) and composite fibers (such as aluminum oxide fibers, carbon fibers, ceramic fibers, metallic fibers, polymeric fibers, and/or the like).

At 102, one or more surfaces of the metal matrix composite substrate is initially (first) treated. For example, outer surfaces of the metal matrix composite substrate are initially treated. In at least one example, the initial treatment is plasma treatment. That is, the method includes initially plasma treating the surface(s) of the matrix composite substrate. As another example, the initial treatment can be a laser ablation treatment.

After the initial treatment, at 104, an adhesion promoter layer is applied on the surface(s) of the metal matrix component substrate. In at least one example, the adhesion promoter layer includes one or more films of material deposited onto the surface(s). In at least one further example, the adhesion promoter layer is a sol-gel layer (for example, a coating or film), such as described in United States Patent No. 5,789,085, entitled "Paint Adhesion," United States Patent No. 5,814,137, entitled "Sol for Coating Metals," United States Patent No. 5,849,110, entitled "Sol Coating of Metals," United States Patent No. 5,869,140, entitled "Surface Pretreatment of Metals to Active the Surface for Sol-Gel Coating," United States Patent No. 5,869,141, entitled "Surface Pretreatment for Sol Coating of Metals," United States Patent No. 5,939,197, entitled "Sol-Gel Coated Metal," United States Patent No. 5,958,578, entitled "Hybrid Laminate Having Improved Metal-To-Resin Adhesion," or United States Patent No. 6,037,060, entitled "Sol for Bonding Epoxies to Aluminum of Titanium Alloys." As another example, the adhesion promoter layer can be a chromate conversion coating.

It has been found that a sol-gel layer, in particular, effectively covalently bonds with the surface(s) of the metal matrix composite substrate without adversely affecting the metal matrix composite substrate (such as by not exposing aluminum oxide, ceramic or carbon fibers of the metal matrix composite substrate). In contrast, preparing the surface through chemical etching, sanding, or the like may adversely expose the composite (such as aluminum oxide, ceramic or carbon) fibers, and can cause damage to the metal matrix composite substrate, such as along bond lines.

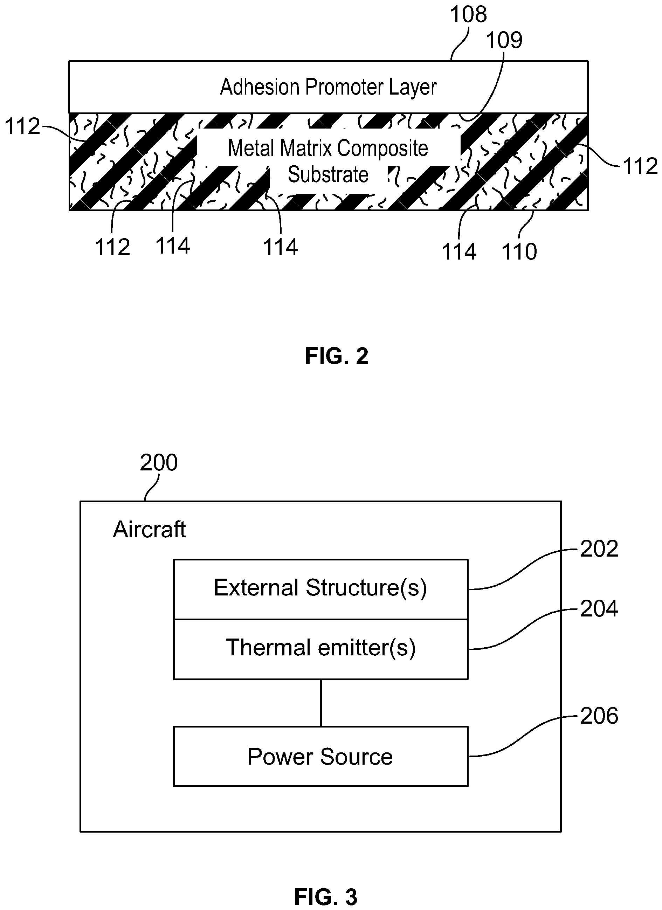

Figure 2 illustrates a simplified block diagram of the adhesion promoter layer 108 applied over a surface 109 of the metal matrix composite substrate 110, according to an example of the present disclosure. Referring to Figures 1 and 2, the adhesion promoter layer 108 is applied on the surface 109 of the metal matrix composite substrate 110 after the surface 109 has been initially treated (such as by plasma treating). The metal matrix composite substrate 110 includes a metal matrix 112 and composite fibers 114.

To prepare the metal matrix composite substrate 110 for subsequent treatment (such as painting), a native oxide layer is removed. It has been found that a nonintrusive initial treatment through plasma treatment effectively cleans and activates the surface 109 for adhesion by removing the native oxide layer without exposing composite fibers of the metal matrix composite substrate 110. It has been further found that application of a sol-gel layer (as the adhesion promoter layer 108) effectively and efficiently prepares the surface 109 of the metal matrix composite substrate 110.

After the adhesion promoter layer 108 is applied to the surface 109 of the metal matrix composite substrate 110, the surface(s) 109 including the adhesion promoter layer 108 is treated (for example, a second or subsequent treating). Examples of such treatment include painting or bonding.

The plasma treatment does not remove material from the metal matrix composite substrate 110. Instead, the plasma treatment physically activates the surface 109 to promote bonding and adhesion. For example, the plasma treatment cleans or otherwise prepares the surface 109 by removing oil, debris, and/or the like. The plasma can be applied to the surface 109 in a variety of ways. The plasma improves bond strength and durability of the metal matrix composite substrate 110.

In at least one example, during the plasma treatment, plasma is applied to the surface 109 of the metal matrix composite material 110 at a constant rate and intensity. Bonding wedge tests and imaging using a scanning electron microscope indicate that the plasma treatment efficiently and effectively cleans the surface 109 of metal matrix composite substrate 110, and activates the surface 109 for improved cohesion with dissimilar materials (such as paint or fiberglass prepreg material).

Figure 3 illustrates a block diagram of an aircraft 200, according to an example of the present disclosure. The aircraft 200 includes external structures 202, such as a fuselage, wings, an empennage, a vertical stabilizer, a horizontal stabilizer, control surfaces (such as ailerons, flaps, etc.), and the like. One or more thermal emitters 204 are coupled to one or more of the external structures 202. In at least one example, thermal emitters 104 are coupled to all of the external structures 202 of the aircraft 200. In at least one other example, thermal emitters 204 are coupled to less than all of the external structures 202 of the aircraft 200.

The thermal emitters 204 are integrated with the external structures 202. For example, the thermal emitters 204 are mounted to exterior surfaces (for example, an outer mold line) of the external structures 202. The thermal emitters 104 can be secured to the exterior surfaces of the external structures 202 through adhesives, fasteners, bonding, and/or the like. As another example, the thermal emitters 204 are embedded within the external structures 202. For example, the external structures 202 can be formed of composite materials, and the external structures 202 can be secured within one or more plies or layers of the external structures 202. As another example, the thermal emitters 204 can be secured to internal surfaces (opposite from the external surfaces) of the external structures 202, such as an interior wall of a fuselage.

In at least one example, the thermal emitters 204 are formed of a material that is configured to conduct, radiate, and/or otherwise emit heat when activated and connected to a power source 206. In particular, the thermal emitters 204 are formed of a metal matrix composite, such as a composite matrix having fibers or particles dispersed in a metallic matrix, such as copper, aluminum, steel, or the like. Referring to Figures 1-3, the thermal emitters 204 are formed of one or more metal matrix composite substrates 110, which are initially treated before an adhesion promoter layer 108 (such as a sol-gel layer) is applied thereon, as described herein. The thermal emitters 204 are merely an example of components formed of one or more metal matrix composite substrate(s) having an applied adhesion promoter layer. Various other structures, components, assemblies, and the like can be formed having such material.

The thermal emitters 204 are coupled to the power source 206 through one or more wired or wireless connections. In operation, the thermal emitters 204 can be activated, such as by a pilot within a flight deck. When activated, the thermal emitters 204 draw power from the power source 206 and generate heat to melt ice on the external structures 202 and/or prevent ice from forming thereon. The thermal emitters 204 deice the external structures 202 without the need for a separate and distinct deicing liquid. Further, the thermal emitters 204 can be operated to deice the external structures 202 when the aircraft 200 is parked at a gate, or moving along a taxiway or runway.

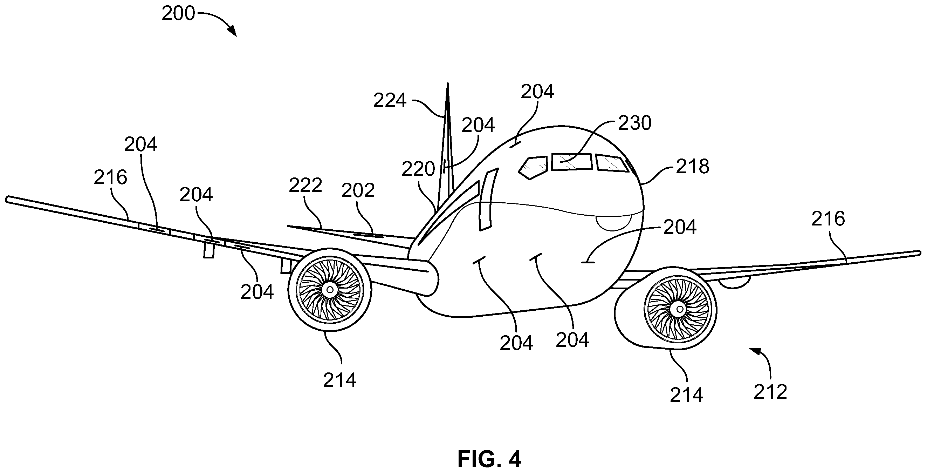

Figure 4 illustrates a perspective front view of an aircraft 200, according to an example of the present disclosure. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224. The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. Figure 4 shows an example of an aircraft 200. It is to be understood that the aircraft 200 can be sized, shaped, and configured differently than shown in Figure 4.

Thermal emitters 204 are coupled to one or more external structures of the aircraft 200. For example, thermal emitters 204 are coupled to the wings 216, the fuselage 218, the empennage 220, the horizontal stabilizers 222, the vertical stabilizer 224, and/or the like.

Referring to Figures 1-4, in at least one example, the thermal emitters 204 are formed of metal matrix composite substrates 110 having applied adhesion promoter layers 108 applied to one or more surfaces 109 thereof, as described herein. The thermal emitters 204 are configured to emit conductive heat energy used to heat an outer mold line of a wing 216 to a desired temperature, melt any ice accumulated thereon, and prevent ice from forming thereon.

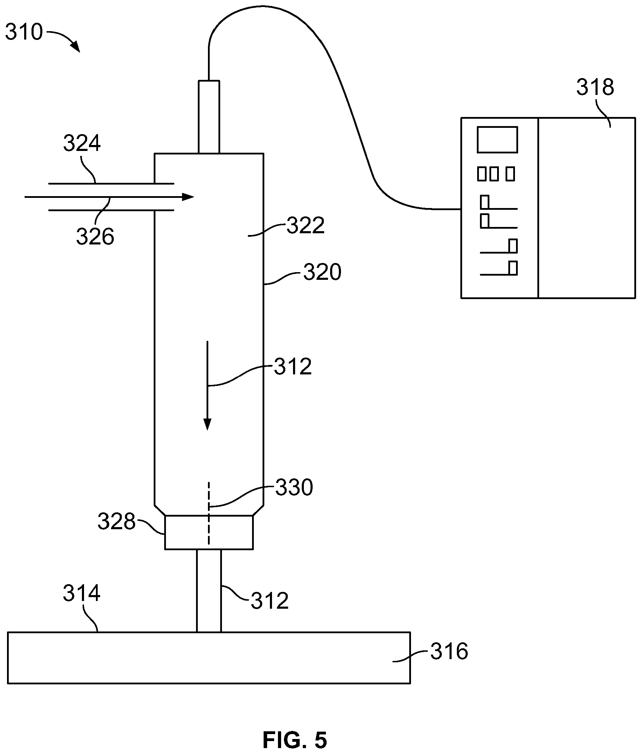

Figures 5-9 illustrate various aspects of plasma treatment processes. Referring to Figures 1 and 5-9, in at least one example, the treatment step 102 is a plasma treatment. The plasma treatment processes shown and described with respect to Figures 5-9 are exemplary, and non-limiting.

Figure 5 shows an atmospheric pressure plasma treatment device 310. The plasma treatment device 310 produces a plasma flume 312 (or an ionized gas) from compressed air for treating a surface 314 of a substrate 316. The surface 314 is an example of the surface 109 shown in Figure 2, and the substrate 316 is an example of the metal matrix composite substrate 110 shown in Figure 2. Although the substrate 316 is depicted as a flat structure in Figure 5, it will be understood that the substrate 316 can have more complex (for example, curved) geometries in practice. Plasma treatment of the surface 314 with the plasma flume 312 modifies and/or cleans the surface 314 to improve bonding of the substrate 316 to applied substances such as paints, adhesives, coatings, inks, or other materials. Specifically, the plasma flume 312 contains charged species that can remove microscopic surface contaminants and/or modify the surface 314 with chemical groups (for example, oxygen functionality) that enhance bonding with applied materials (paints, adhesives, coatings, inks, and the like). The plasma treatment can increase the surface energy of the surface 314, thereby increasing the propensity of the surface for bonding relative to the surface prior to plasma treatment.

The plasma treatment device 310 can be operated manually or robotically, such as with a robotic gantry system. As shown in Figure 5, the plasma treatment device 310 includes a plasma generator 318 connected to a plasma jet 320. Among other features, the plasma jet 320 includes a chamber 322, one or more inlets 324 for compressed air 326, and a nozzle 328. The nozzle 328 can be removed from the device 310, and replaced with other nozzles having other configurations to achieve desired effects on the plasma flume 312. Upon excitation with electrical power from the plasma generator 318, compressed air 326 within the chamber 322 is ionized to produce the plasma flume 312. The plasma flume 312 is expelled from the chamber 322 and through the nozzle 328, and impinges on the surface 314 normal to the surface 314 for treatment thereof. Additionally, the plasma flume 312 emanates from the nozzle 328 at an emanation angle that is controlled by the configuration of the nozzle 328. As explained further below, the emanation angle is an angle of deflection between the plasma flume 312 and a central axis 330 of the nozzle 328.

In at least one example, the emanation angle of the nozzle 328 is about 5 degrees (±0.2%) or less. The low emanation angle of the nozzle 328 provides a more intense and focused (less diffuse) plasma flume relative to nozzles with greater emanation angles. The more intense and focused plasma flume provided with the nozzle 328 increases the bonding propensity of substrate surfaces at reduced treatment times compared to nozzles with higher emanation angles.

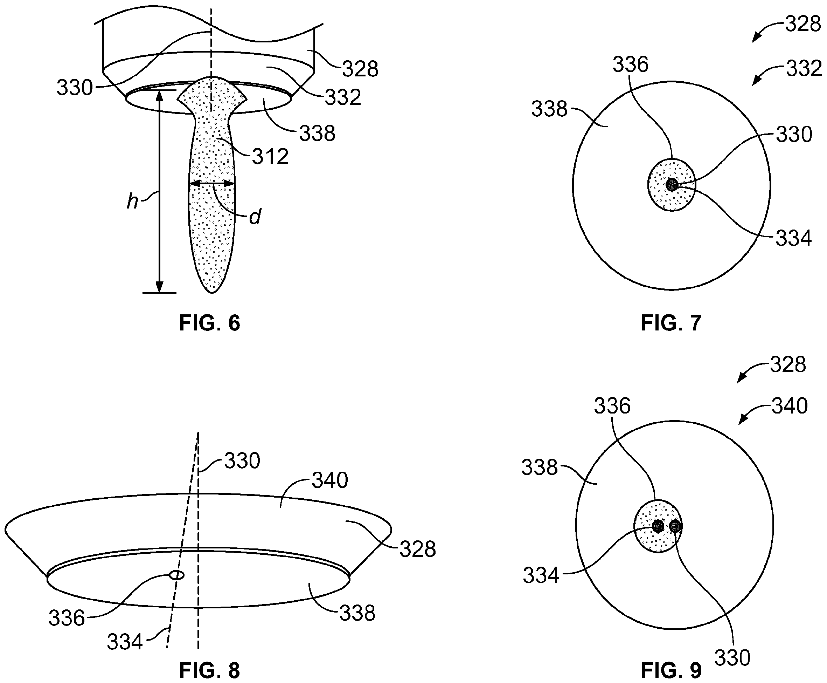

In at least one example, the nozzle 328 is a 0-degree nozzle 332 having an emanation angle of about 0 degrees (±0.2%), as shown in Figures 6-7. The emanation angle is defined as an angle between the nozzle central axis 330 and a central axis 334 of a flume aperture 336 through which the plasma flume 312 emanates at a tip 338 of the nozzle 332 (as shown in Figure 7). As such, the central axis 330 of the nozzle 332 and the central axis 334 of the flume aperture 336 may be aligned or at least parallel in the 0-degree nozzle 332.

Although nozzles having greater emanation angles can be rotated in order to provide a more diffuse annular flume or plasma "cone" or "ring," the 0-degree nozzle 332 is generally not rotated during plasma treatment. Due to the low emanation angle, the 0-degree nozzle 332 can provide a more focused and intense plasma flume for impingement on the substrate surface 314 at a given orientation, such as a normal orientation, as compared to nozzles having greater emanation angles. The diameter (d) of the plasma flume 312 emanating from the 0-degree nozzle 332 can be about 6.4 millimeters (±2%), with it being understood that the exterior or outer edge of the plasma flume 312 is fluid and variable in practice. Accordingly, the diameter (d) of the plasma flume disclosed herein is approximate but generally constant as it is generated by the plasma device 310. Additionally, the plasma flume 312 can have a height (h) ranging from about 1.2 centimeters to about 2.0 centimeters. As such, the distance between the tip 338 of the nozzle 332 and the substrate surface 314 during plasma treatment can range from about 1.2 centimeters to about 2.0 centimeters during the plasma treatment process. In contrast, a 17-degree nozzle, which has an emanation angle of 17 degrees and rotates (typically at about 2800 rpm) during plasma treatment, produces an annular flume with a plasma flume diameter of about 24 millimeters and a height of about 1.3 centimeters. The 0-degree nozzle 332 thus affords a greater working distance than the 17-degree nozzle, and provides a plasma flume that is about four times more focused than the wider (more diffuse) annular plasma flume of the 17-degree nozzle. The greater working distance can facilitate processing of substrates with complex geometries. Depending on the configuration of the 0-degree nozzle 332 and/or other factors, the diameter (d) and height (h) of the plasma flume can deviate from the values provided above.

The intense plasma flume 312 generated by the 0-degree nozzle 332 can substantially reduce plasma treatment times needed for increasing bonding propensities of substrate surfaces compared to nozzles having emanation angles greater than 5 degrees.

In the example shown in Figures 8-9, a nozzle 328 is a 2-degree nozzle 340 having an emanation angle of about 2 degrees (±0.2%). In the 2-degree nozzle 340, the central axis 334 of the flume aperture 336 is at a 2-degree angle with respect to the nozzle central axis 330. The 2-degree nozzle 340 can rotate during plasma treatment to provide an annular plasma flume slightly wider and more diffuse than the plasma flume provided by the 0-degree nozzle 332. Nonetheless, the plasma flume provided by the 2-degree nozzle 340 is considerably more focused and intense than plasma flumes produced by nozzles with greater emanation angles. As such, similar to the 0-degree nozzle 332, the 2-degree nozzle 340 can allow shorter treatment times of substrates relative to nozzles with greater emanation angles.

Further, the disclosure comprises examples according to the following clauses:
Clause 1. A method comprising:
   initially treating one or more surfaces of a metal matrix composite substrate; and
   after said initially treating, applying an adhesion promoter layer on the one or more surfaces of the metal matrix composite substrate.
Clause 2. The method of Clause 1, wherein the metal matrix composite substrate forms a portion of an aircraft.
Clause 3. The method of Clauses 1 or 2, wherein the metal matrix composite substrate comprises a metal matrix and composite fibers.
Clause 4. The method of any of Clauses 1-3, wherein said initially treating comprises plasma treating.
Clause 5. The method of any of Clauses 1-4, wherein said initially treating comprises laser ablating.
Clause 6. The method of any of Clauses 1-5, wherein the adhesion promoter layer comprises one or more films of material.
Clause 7. The method of any of clauses 1-6, wherein the adhesion promoter layer comprises a sol-gel layer.
Clause 8. The method of any of clauses 1-7, wherein the adhesion promoter layer comprises a chromate conversion coating.
Clause 9. The method of any of Clauses 1-8, further comprising after said applying the adhesion promoter, subsequently treating the metal matrix composite substrate having the adhesion promoter layer applied on the one or more surfaces.
Clause 10. The method of Clause 9, wherein said subsequently treating comprises painting.
Clause 11. The method of any of Clauses 1-10, further comprising forming a thermal emitter with the metal matrix composite substrate.
Clause 12. A method comprising:
   plasma treating one or more surfaces of a metal matrix composite substrate, wherein the metal matrix composite substrate comprises a metal matrix and composite fibers;
   after said plasma treating, applying an adhesion promoter layer on the one or more surfaces of the metal matrix composite substrate;
   after said applying the adhesion promoter, subsequently treating the metal matrix composite substrate having the adhesion promoter layer applied on the one or more surfaces.
Clause 13. The method of Clause 12, wherein the metal matrix composite substrate forms a portion of an aircraft.
Clause 14. The method of Clauses 12 or 13, wherein the adhesion promoter layer comprises one or more films of material.
Clause 15. The method of any of Clauses 12-14, wherein the adhesion promoter layer comprises a sol-gel layer.
Clause 16. The method of any of Clauses 12-15, wherein the adhesion promoter layer comprises a chromate conversion coating.
Clause 17. The method of any of Clauses 12-16, wherein said subsequently treating comprises painting.
Clause 18. The method of any of Clauses 12-17, further comprising forming a thermal emitter with the metal matrix composite substrate.
Clause 19. A method comprising:
   plasma treating one or more surfaces of a metal matrix composite substrate, wherein the metal matrix composite substrate comprises a metal matrix and composite fibers;
   after said plasma treating, applying a sol-gel layer on the one or more surfaces of the metal matrix composite substrate;
   after said applying the adhesion promoter, painting the metal matrix composite substrate having the sol-gel layer applied on the one or more surfaces.
Clause 20. The method of Clause 19, wherein the metal matrix composite substrate forms a portion of an aircraft.
Clause 21. A structure comprising:
   a metal matrix composite substrate; and
   an adhesion promoter layer on a surface of the metal matrix composite substrate, wherein the structure has been prepared according to the method of any preceding claim.
Clause 22. The structure of clause 21, wherein the structure forms a portion of an aircraft.
Clause 23. The structure of clause 21 or 22, wherein the metal matrix composite substrate comprises a metal matrix and composite fibers.
Clause 24. The structure of any of clauses 21 to 23, wherein the adhesion promoter layer comprises one of: one or more films of material; a sol-gel layer and a chromate conversion coating.
Clause 25. The structure of any of clauses 21 to 24, wherein structure further comprises at least one of paint, adhesive, coating and ink applied on the adhesion promoter layer.
Clause 26. The structure of any of clauses 21 to 25, wherein the structure is a thermal emitter, or wherein the metal matrix composite substrate is a thermal emitter.
Clause 27. An aircraft comprising a structure of any of clauses 21 to 26.

As described herein, examples of the present disclosure provide efficient and effective methods for preparing a surface of a metal matrix composite material. Further, examples of the present disclosure provide methods for preparing a surface of a metal matrix composite material that does not adversely affect bonding properties of the metal matrix composite material.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method comprising:
initially treating one or more surfaces (109, 314) of a metal matrix composite substrate (110); and
after said initially treating, applying an adhesion promoter layer (108) on the one or more surfaces (109, 314) of the metal matrix composite substrate (110).

2. The method of claim 1, wherein the metal matrix composite substrate (110) forms a portion of an aircraft (200).

3. The method of claim 1 or claim 2, wherein the metal matrix composite substrate comprises a metal matrix (112) and composite fibers.

4. The method of any preceding claim, wherein said initially treating comprises plasma treating.

5. The method of any preceding claim, wherein said initially treating comprises laser ablating.

6. The method of any preceding claim, wherein the adhesion promoter layer (108) comprises one or more films of material.

7. The method of any preceding claim, wherein the adhesion promoter layer comprises a sol-gel layer.

8. The method of any preceding claim, wherein the adhesion promoter layer comprises a chromate conversion coating.

9. The method of any preceding claim, further comprising after said applying the adhesion promoter, subsequently treating the metal matrix composite substrate (110) having the adhesion promoter layer (108) applied on the one or more surfaces (109, 314).

10. The method of claim 9, wherein said subsequently treating comprises painting.

11. The method of any preceding claim, further comprising forming a thermal emitter (104, 204) with the metal matrix composite substrate (110).

12. A structure comprising:
a metal matrix composite substrate; and
an adhesion promoter layer method on a surface of the metal matrix composite substrate, wherein the structure has been prepared according to the method of any preceding claim.

13. The structure of claim 12, wherein the metal matrix composite substrate forms a portion of an aircraft.

14. The structure of claim 12 or claim 13, wherein the metal matrix composite substrate comprises a metal matrix and composite fibers.

15. The structure of any of claims 12 to 14, wherein the adhesion promoter layer comprises one of: one or more films of material; a sol-gel layer and a chromate conversion coating.
